# FASCICULE DE BREVET EUROPEEN

(11) **EP 1 537 983 B1**
(45) Date de publication et mention de la délivrance du brevet: **01.02.2006**
(21) Numéro de dépôt: 04300573.5
(22) Date de dépôt: 03.09.2004
(51) Int. Cl.: B29C 73/10, B64F 5/00

(54) **Dispositif d'équipement d'un trou dans un panneau et panneau ainsi équipé**
Einrichtung für ein Loch in einer Platte und so eingerichtete Platte
Device for equipping a hole in a panel and equipped panel

(30) Priorité: 04.12.2003 FR 0350975
(43) Date de publication de la demande: 08.06.2005
(73) Titulaire: AIRBUS France, 31060 Toulouse Cedex 03 (FR)
(72) Inventeur: Fournie, Ludovic, 31400 Toulouse (FR); Cabanac, Jean-Pierre, 31170 Tournefeuille (FR); Lacombe, Jean-Claude, 31700 Blagnac (FR)
(74) Mandataire: Schmit, Christian Norbert Marie

(56) Documents cités:
- FR-A- 2 506 405
- GB-A- 2 017 857
- US-A- 5 023 987

## Description

La présente invention a pour objet un dispositif d'équipement d'un trou dans un panneau, notamment un panneau d'un avion encore qu'elle puisse être utilisée dans tout autre type de structure, selon le préambule de la revendication 1 (voir US-A-5-023 987). Elle a également pour objet un panneau ainsi équipé. Le but de l'invention est de concourir à une meilleure tenue des panneaux munis de tels trous, que la réalisation de ces trous résulte d'un besoin à priori, ou d'une réparation ultérieure du panneau.

Pour la réalisation des structures et en particulier pour celle des aéronefs, il est courant de réaliser des panneaux, typiquement ceux des ailes ou du fuselage d'un avion. Pour des raisons de poids et de dureté mécanique, les panneaux sont généralement réalisés à l'aide de matériaux composites, typiquement des nappes de fibres de carbone et ou des nappes en matériau stratifié. La réalisation d'un panneau entraîne, dans la structure équipée par ce panneau, la séparation de volumes d'un côté du panneau de ceux situés de l'autre côté. Il est quelquefois nécessaire de transmettre des informations, ou des fluides, d'un côté à l'autre. Il devient alors nécessaire de réaliser un trou dans le panneau pour permettre ce passage. Dans d'autres situations, le panneau a été endommagé à un endroit et la détérioration du matériau du panneau à cet endroit conduit à réaliser un trou propre, et à équiper ce trou d'une pièce de réparation. Dans d'autres cas, le trou est simplement destiné à permettre une visite, auquel cas il est bouché en permanence par un couvercle, le couvercle étant enlevé au moment des inspections.

Le problème présenté par les matériaux composites, notamment ceux travaillant en compression dans le sens du plan du panneau, est que la réalisation d'un trou obère d'une manière inacceptable la résistance correspondante. En pratique, la rupture d'un tel panneau soumis à une compression extrême (qui est elle-même bien supérieure à la compression limite à laquelle doit être soumis le panneau lors de son utilisation, notamment au moment du vol de l'avion, mais nécessaire pour respecter les coefficients de sécurité JAR et FAR) se présente sous la forme d'un délaminage dans l'épaisseur du panneau, et d'une interpénétration de deux parties de ce panneau soumis à l'effort à l'endroit de ce délaminage.

Cette interpénétration, synonyme de rupture, se produit, dans le cas où un trou a été réalisé dans le panneau, d'une part approximativement en regard d'un diamètre du trou qui est perpendiculaire à la direction de la compression, et d'autre part à une valeur de compression très nettement inférieure à une valeur extrême obtenue lorsque le trou n'est pas là. Dans un exemple les rapports de ces valeurs sont de l'ordre de 2 ou 3. On mesure en conséquence la fragilisation apportée par la présence d'un trou.

Pour remédier à ce type de problème il est connu de renforcer le panneau à l'endroit où le trou est réalisé. Il apparaît cependant que ce renforcement est une opération compliquée, notamment lorsque à l'endroit du renforcement sont présents des raidisseurs (en pratique séparés les uns des autres par un écart de l'ordre de 20 centimètres). Par ailleurs, une fois ce renfort réalisé, l'équipement du trou, notamment pour y placer un couvercle, lui-même fragilise normalement les bords du trou et donc contribue à réduire l'efficacité du renfort apporté. Dans tous les cas l'équipement, notamment du fait de la présence des raidisseurs conduit à un surpoids non négligeable en particulier lorsqu'il s'agit d'avions. Dans un exemple pratique les trous peuvent avoir des dimensions passant de quelques centimètres jusqu'à vingt centimètres.

Dans l'invention, pour résoudre ce problème on a eu l'idée de procéder différemment. Plutôt que de réaliser pour le trou un renfort et un couvercle classique, on a prévu de réaliser une platine rigide, qui s'engage dans le trou et qui vient prendre appui par ses chants contre des chants du panneau à l'endroit du trou. Les efforts de compression sont donc transmis par contact entre le panneau composite et la platine. Cette platine sert alors, notamment au moment où la compression s'exerce, d'élément de reprise de l'effort de compression et a pour conséquence que la détérioration du panneau composite, à l'endroit du trou ne se produit alors plus que pour des efforts bien supérieurs, en pratique de l'ordre de 30 % à ceux équivalents obtenus lorsque le trou a été renforcé d'une manière classique. On montrera par la suite que la platine, réalisée en pratique en aluminium, ou en tout autre métal ou matériau encore plus rigide, contribue à ne pas augmenter le poids du panneau à l'endroit du trou, et dispense par ailleurs des percements autrement réalisés dans les renforts latéraux à la périphérie du trou pour pouvoir installer le couvercle. La platine peut ainsi être réalisée en tout autre matériau, en particulier en matériau composite.

L'invention a donc pour effet l'amélioration de la tenue structurelle d'un panneau en compression troué par la mise en place d'une platine par contact, cette platine habitant le trou.

L'invention a donc pour objet un dispositif d'équipement d'un trou dans un panneau d'une structure, notamment d'un aéronef, le panneau, notamment un extrados, étant susceptible d'être soumis à un effort de compression dans une direction perpendiculaire à une direction du trou, le dispositif comportant
- au moins une première plaque amovible, et
- maintenu sur cette première plaque, une platine occupant le trou, cette platine réalisant une reprise de l'effort de compression, par un contact sur un chant du trou,
caractérisé en ce que :
- la première plaque et la platine comportent des ailes pour être montées par pincement sur le panneau,
- la platine est munie de percements à l'endroit d'un renfort périphérique en appui contre le chant du trou,
- des vis de solidarisation sont engagées dans ces percements.

L'invention a également pour objet un panneau équipé d'un tel dispositif.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a et 1b : une vue en coupe et une vue de dessus respectivement du dispositif d'équipement d'un trou selon l'invention;
- Figures 2a, 2b et 3a, 3b : des représentations cotées, et respectivement en perspective d'une plaque et de la platine du dispositif de l'invention ;
- Figure 4 et figure 5 : des vues en coupe des plaques et de la platine des figures 2a et 3a respectivement.
- Figure 6 : un diagramme d'effort montrant les effets de l'invention.

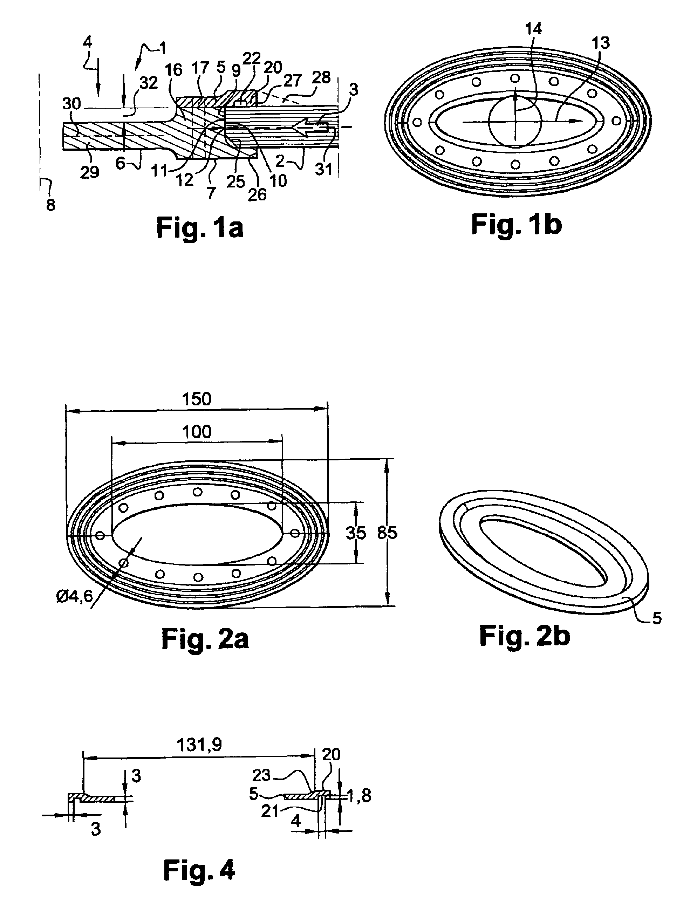

La figure 1 a montre un dispositif d'équipement d'un trou selon l'invention. Ce dispositif est destiné à équiper un trou 1 réalisé dans un panneau 2. Le panneau 2 est un panneau d'une structure quelconque, en particulier le panneau 2 est un panneau en matériau composite d'un aéronef. Le panneau 2 est, dans l'invention, un panneau susceptible d'être soumis à un effort 3 de compression, dans le plan du panneau. La direction de l'effort 3 est sensiblement perpendiculaire à une direction 4 du trou 1. Tout au plus, un écart de quelques degrés peut se présenter du fait d'un flambage, léger, du panneau 2. Dans l'invention, le dispositif d'équipement du trou 1 comporte au moins une première plaque amovible 5 et une platine 6 qui occupe le trou 1. Dans une variante préférée, la platine 6 est solidaire d'une aile 7 permettant de maintenir le panneau 2 en pincement, sans compression exagérée toutefois. Il serait envisageable de réaliser par ailleurs l'aile 7 d'une manière amovible, comme la plaque 5.

Dans un exemple, la plaque 5, la platine 6 et ou l'aile 7 indépendante sont de révolution autour d'un axe 8 passant par le centre du trou 1 (quand ce dernier est circulaire).

La reprise de l'effort de compression 3, à l'endroit d'un contact 9 entre un chant 10 du panneau 2, et un chant 11 de la platine 6 peut se réaliser en limitant le jeu 12 d'insertion de la platine 6 dans le panneau 2 à son maximum. Dans un exemple, l'insertion de la platine dans le trou se réalise par forçage. Autrement, dans une variante préférée, ce jeu est de l'ordre de 1/10^{ème} de millimètres et ce jeu est naturellement comblé, au moment où l'effort 3 est appliqué, par un déplacement du chant 10 en direction du chant 11. La platine 6 étant, dans le trou 1, très rigide, elle contribue à assurer la continuité de la transmission de l'effort de telle façon que la limite de rupture du panneau 2 au droit du trou 1 sera bien supérieure aux limites de rupture obtenues lorsque des renforts de type classique étaient réalisés, et en pratique du même ordre, voire supérieure, à la limite de rupture du panneau seul sans trou ou due à d'autres types de rupture (flambage, dommage d'impact ou autres).

Sur la figure 1b, on montre que de préférence le trou 1, la plaque 5 et la platine 6 ont une forme ovale avec un grand axe 13 perpendiculaire à un petit axe 14. Le grand axe 13 est colinéaire avec la direction 3 de compression attendue. Par rapport à un trou rond d'axe 8, le trou ovale de la figure 1 b peut être obtenu par une fraise industrielle suivant un parcours elliptique ou ovale et avec laquelle on sait obtenir le jeu de 0,1 millimètre indiqué ci-dessus.

On notera que la réalisation du dispositif d'équipement en deux parties au moins, plaque 5 et platine 6, voire en trois parties plaque 5, platine 6 interne seulement, et aile 7 rapportée, permet de monter facilement toutes ces parties sur le trou en les maintenant de part et d'autre du panneau 3. La solidarisation de la plaque 5 sur la platine 6 peut être réalisée par tout moyen. Notamment, à l'endroit d'un renfort périphérique 16 de la platine 6, celle-ci peut être munie de percements 17 en regard de mêmes percements de la plaque 5 pour y engager des vis de solidarisation de la plaque 5 sur la platine 6. Lorsque la platine 6 est munie de son aile 7 intégrée, les percements 17 peuvent eux-mêmes être filetés de manière à pouvoir se passer d'un écrou de l'autre côté de la platine. Dans l'exemple schématiquement représenté, la solidarisation est obtenue par douze vis. Plus le trou 1 est gros plus le nombre de vis sera important. La platine 6 peut être maintenue sur la première plaque 5 également par collage ou soudage.

En variante, la platine 6 peut être munie d'un embout fileté s'élevant selon l'axe 8 perpendiculairement au plan de cette platine 6, du côté de la platine 6 opposé à celui qui porte l'aile 7. Dans ce cas, la plaque 5 peut prendre la forme d'un gros écrou, vissé sur cet embout fileté. Le gros écrou possède lui-même un diamètre externe suffisant pour venir prendre appui en réaction contre l'autre côté du panneau 2. Au besoin, une rondelle de grand diamètre extérieur est placée entre le gros écrou et le panneau 2. Le gros écrou, ou le gros écrou et cette rondelle, forment la plaque 5 de l'invention.

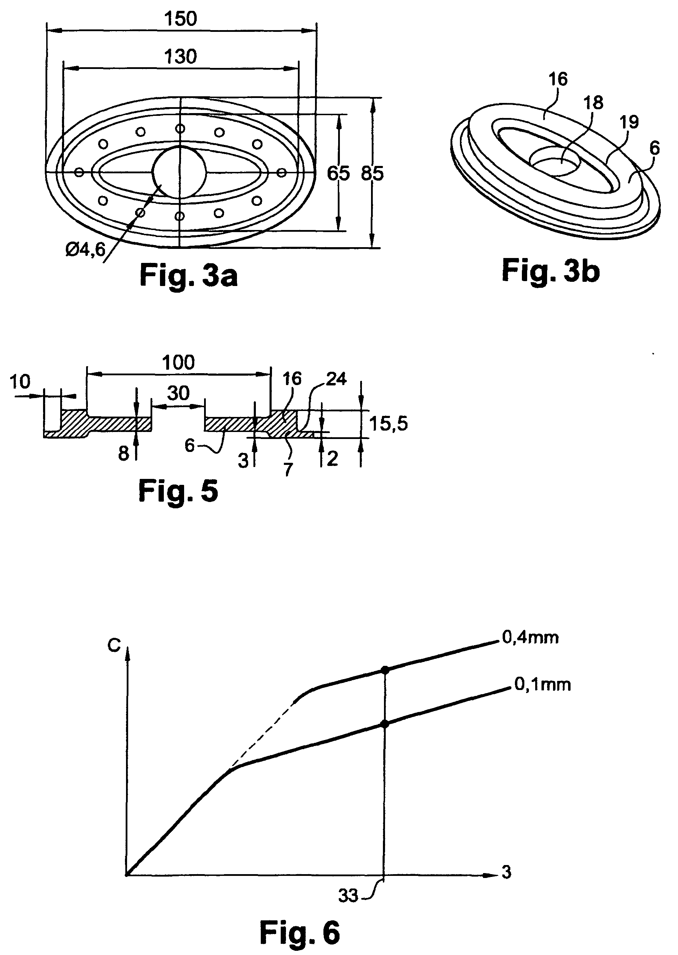

Les figures 2a et 3a donnent des indications cotées de la plaque 5 et de la platine 6 respectivement. Les cotes sont données en millimètres. Dans un exemple particulier de réalisation, le trou 1 de forme ovale réalisé dans le panneau aura une taille de 130 mm pour le grand axe et de 65 mm pour le petit axe, c'est à dire un rapport des diamètres ou des rayons de courbure de préférence égal à 2. Ce rapport est un rapport préféré dans le cas où la direction de l'effort de compression 3 est connue. Si ce rapport est inférieur, les effets de l'invention, tout en étant significatifs, ne sont pas optimisés. S'il est supérieur, des effets supérieurs sont attendus. Toutefois dans ce cas, pour un aéronef, des problèmes de faisabilité peuvent être rencontrés compte tenu de l'encombrement occasionné par la réalisation du trou 1 dans le panneau.

La platine 6, quand elle comporte elle-même un trou de passage 18, figure 3b, possède un bord intérieur 19 du renfort 16, lui aussi en forme d'ellipse dont le grand axe vaut 100 mm et le petit axe 35 mm. Dans cet exemple, les dimensions hors tout de la plaque 5 et de la platine 6 sont de 150 mm selon le grand axe, et de 85 mm selon le petit axe. Dans l'exemple les trous 17 percés dans le renfort 16 ont un diamètre de 4,8 mm. Le trou central 18 a, dans cet exemple, un diamètre égal à 30 mm.

Les figures 4 et 5 donnent les cotes, en coupe, des plaques 5 et de la platine 6. La plaque 5, figure 4, forme ainsi une entretoise. Elle comporte une partie plane, d'épaisseur 3 millimètres, venant prendre appui sur le renfort 16. Au-delà du chant 11 de la platine 6, et donc du bord extérieur du renfort 16, la plaque 5 possède une aile 20 d'épaisseur supérieure, par exemple 5 millimètres. La rigidité de l'aile 5 est donc augmentée à l'endroit où cette aile est en porte-à-faux par rapport au renfort 16. L'aile 20 est destinée à venir prendre appui sur une face du panneau 3, alors que l'aile 7 de la platine prend appui sur l'autre partie. Lors de la solidarisation de la platine 6 sur la plaque 5, le panneau 2 est maintenu par pincement. Dans une variante, l'aile 20 est munie d'une rainure 21 de 4 millimètres de largeur et de 1,8 millimètres de profondeur dans laquelle peut être placé un joint 22 en élastomère permettant d'assurer l'étanchéité du montage. On pourrait également monter un tel joint sur la platine 6. L'aile 20 est raccordée à la partie plane de la plaque 5 par un congé 23, par exemple arrondi.

En ce qui concerne la platine 6, dans sa version préférée munie de son aile 7, son épaisseur hors tout est de 15,5 millimètres, l'épaisseur du dépassement de l'aile 7 de l'autre côté de la face du panneau 3 étant de 3 millimètres, compte tenu de l'absence de réalisation de joint à cet endroit. L'aile 7 formant un monobloc avec la platine 6 est reliée au renfort 16 par un congé arrondi 24. Le congé 24 a pour objet simplifier la fabrication. Il conduit alors à réaliser sur le panneau 3, au moment de la réalisation du trou 1, un chanfrein 25 pour le recevoir.

Il est possible de prévoir de réaliser par ailleurs dans le panneau 3 des feuillures pour accepter les extrémités respectivement 26 et 27 des ailes 7 et 5 respectivement. Dans ce cas la réalisation de cette feuillure devra être telle que de préférence les efforts de compression 3 appliqués par le panneau 2 soient appliqués également sur ces chants 26 et 27. Si on ne veut pas réaliser de telles feuillures, et si par ailleurs pour des raisons aérodynamiques on cherche à limiter les effets de turbulence provoqués par la présence en surélévation des ailes 5 ou 7, on peut prévoir la réalisation d'un joint au mastic 28 après montage de l'ensemble.

La figure 1a montre par ailleurs que, autant le renfort 16 se déploie sur toute la hauteur du chant 12, autant la partie d'obturation 29 du trou 1, circonscrite par ce renfort 16, ne s'étend pas sur toute cette hauteur. L'épaisseur est plus faible. La raison en est simple : le matériau du dispositif d'équipement du trou étant plus rigide que le matériau composite, par exemple en aluminium ou en titane, il n'a pas besoin d'être aussi épais d'ou un gain de poids.

Dans un exemple, en outre, plutôt que de centrer l'axe neutre 30 de la partie d'obturation 29 dans l'alignement de l'axe neutre 31, au milieu du panneau 2, on peut préférer lui faire subir un décalage égal à la moitié d'un écart 32. L'écart 32 correspond au décalage des surfaces respectives du panneau 2 et de la partie d'obturation 29. En effet, la fixation de l'aile 7 sur la platine 6, dans le cas préféré lorsqu'elles sont monobloc, a pour conséquence que le flambage aura plutôt tendance à se produire dans la direction de la plaque 5 vers l'aile 7. Dans ces conditions il est préférable de déplacer, de décaler, l'axe neutre 30 vers l'aile 7. Pour simplifier la fabrication, ce décalage est égal à la moitié de la réduction 32 de l'épaisseur de la zone d'obturation 29 par rapport à l'épaisseur du panneau 2 et donc du renfort 16.

Dans un autre cas, avec cette épaisseur plus faible que la platine 6, on a trouvé préférable de mettre les axes neutres dans l'alignement l'un de l'autre, sans décalage. L'axe neutre de la platine 6 est alors placé au milieu des deux faces du panneau.

L'invention est donc particulièrement intéressante lorsque le trou réalisé dans un panneau est soumis à un effort de compression. En particulier ceci est le cas pour un extrados d'une aile ou du fuselage.

La figure 6 montre un graphe exprimant schématiquement la contrainte C de compression subie par le panneau 2 au droit du petit axe 14, en fonction de l'effort 3 appliqué. Elle montre clairement que si le jeu de réalisation du renfort 16 par rapport au champ 10 du trou 1 est de 0,1 millimètre, pour un même effort 33 la contrainte exercée sur le panneau sera plus faible que lorsque le jeu est plus fort : 0,4 millimètres. Sur le plan pratique avec la machine de fraisage du trou 1 on peut prévoir de réaliser un jeu faible, typiquement de 0,1 millimètre. Cependant, il est aussi envisageable de réaliser un jeu plus important, par exemple de 1 millimètre et de combler ce jeu par des cales souples, par exemple en aluminium, de 0,9 millimètre d'épaisseur ou autre, et de mettre ces cales en place en même temps que la platine 6 est engagée dans le trou 1, ou en tout cas avant la mise en place de l'aile 5. En variante, ce jeu peut être comblé par un liquide se solidifiant.

## Revendications

1. Dispositif d'équipement d'un trou (1) dans un panneau (2) d'une structure, notamment d'un aéronef, le panneau, notamment un extrados, étant susceptible d'être soumis à un effort (3) de compression dans une direction (4) perpendiculaire à une direction du trou, le dispositif comportant
- au moins une première plaque (5) amovible, et
- maintenu sur cette première plaque, une platine (6) occupant le trou, cette platine réalisant une reprise de l'effort de compression, par un contact sur un chant du trou,
**caractérisé en ce que** :
- la première plaque et la platine comportent des ailes (26, 27) pour être montées par pincement sur le panneau,
- la platine est munie de percements à l'endroit d'un renfort périphérique en appui contre le chant du trou,
- des vis de solidarisation sont engagées dans ces percements.

2. Dispositif selon la revendication 1, **caractérisé en ce que** la platine occupe le trou du panneau avec un jeu minimal (9) qui est comblé par la déformation du panneau lorsque celui-ci est soumis à la compression, notamment lorsque l'aéronef vole.

3. Dispositif selon l'une des revendications 1 à 2, **caractérisé en ce que** le trou a une forme ovale, l'effort de compression étant orienté comme le grand axe (13) de l'ovale.

4. Dispositif selon l'une des revendications 1 à 3, **caractérisé en ce que** le trou est ovale avec, pour un aéronef, un rapport des rayons extrêmes de préférence égal à deux.

5. Dispositif selon l'une des revendications 1 à 4, **caractérisé en ce que** la platine comporte elle-même un trou (18).

6. Dispositif selon l'une des revendications 1 à 5, **caractérisé en ce que** le panneau est faiblement plastique, par exemple il est formé de matériaux composites, notamment d'une nappe de fibres de carbone et ou d'une nappe en matériaux stratifiés.

7. Dispositif selon l'une des revendications 1 à 6, **caractérisé en ce qu'**une aile comporte un joint (22) d'étanchéité.

8. Dispositif selon l'une des revendications 1 à 7, **caractérisé en ce qu'**une aile est raccordée à la plaque et ou à la platine avec un congé (23) de raccordement.

9. Dispositif selon l'une des revendications 1 à 8, **caractérisé en ce que** la platine comporte une partie centrale (29) de reprise d'effort d'épaisseur plus faible que le panneau, et décalée (32) vers une des faces du panneau.

10. Dispositif selon l'une des revendications 1 à 8, **caractérisé en ce que** la platine comporte une partie centrale (29) de reprise d'effort d'épaisseur plus faible que le panneau, et placée au milieu des deux faces du panneau.

11. Dispositif selon l'une des revendications 1 à 10, **caractérisé en ce que** la première plaque et ou la platine sont en aluminium, en titane, ou en composite.

12. Dispositif selon l'une des revendications 1 à 11, **caractérisé en ce que** la platine est maintenue sur la première plaque par vissage (17) ou collage.

13. Dispositif selon l'une des revendications 1 à 12, **caractérisé en ce que** le panneau est chanfreiné (26) et ou dispose d'une feuillure à l'endroit du montage de la plaque et ou de la platine.

14. Panneau équipé d'un dispositif selon l'une des revendications 1 à 13.

## Patentansprüche

1. Vorrichtung zur Ausrüstung eines Lochs (1) in einer Fläche (2) einer Struktur, insbesondere eines Luftfahrzeugs, wobei die Fläche, insbesondere eine Oberseite, sich eignet, um einer Kompressionsbelastung (3) in einer Richtung (4) ausgesetzt zu werden, welche senkrecht zu einer Richtung des Lochs ist, wobei die Vorrichtung Folgendes umfasst:
- mindestens eine abnehmbare erste Platte (5), und
- eine Platine (6), die auf der ersten Platte befestigt ist und das Loch einnimmt, wobei die Platine die Kompressionsbelastung aufnimmt durch einen Kontakt auf einer Kante des Lochs, **dadurch gekennzeichnet, dass**:
- die erste Platte und die Platine Flügel (26, 27) aufweisen, um durch Klemmung auf die Fläche montiert zu werden,
- die Platine mit Durchbrüchen an der Stelle einer peripheren, gegen die Kante des Lochs gestützten Verstärkung versehen ist,
- Befestigungsschrauben in diesen Durchbrüchen angebracht sind.

2. Vorrichtung nach Anspruch 1, **dadurch gekennzeichnet, dass** die Platine das Loch der Fläche mit einem minimalen Spiel (9) einnimmt, welches durch die Verformung der Fläche gefüllt wird, wenn diese der Kompression ausgesetzt ist, insbesondere wenn sich das Luftfahrzeug im Flug befindet.

3. Vorrichtung nach Anspruch 1 oder 2, **dadurch gekennzeichnet, dass** das Loch eine ovale Form besitzt, wobei die Kompressionsbelastung entlang der großen Achse (13) des Ovals ausgerichtet ist.

4. Vorrichtung nach einem der Ansprüche 1 bis 3, **dadurch gekennzeichnet, dass** das Loch eine ovale Form besitzt mit, für ein Luftfahrzeug, einem Verhältnis der größten Radien von vorzugsweise gleich zwei.

5. Vorrichtung nach einem der Ansprüche 1 bis 4, **dadurch gekennzeichnet, dass** die Platine selbst ein Loch (18) enthält.

6. Vorrichtung nach einem der Ansprüche 1 bis 5, **dadurch gekennzeichnet, dass** die Fläche geringfügig plastisch ist und beispielsweise aus Verbundwerkstoffen geformt ist, insbesondere aus einer Schicht Kohlenstofffasern und/oder aus einer Schicht Schichtmaterialien.

7. Vorrichtung nach einem der Ansprüche 1 bis 6, **dadurch gekennzeichnet, dass** ein Flügel eine Dichtung (22) aufweist.

8. Vorrichtung nach einem der Ansprüche 1 bis 7, **dadurch gekennzeichnet, dass** ein Flügel mit der Platte und/oder mit der Platine mittels einer Ausrundung (23) verbunden ist.

9. Vorrichtung nach einem der Ansprüche 1 bis 8, **dadurch gekennzeichnet, dass** die Platine einen zentralen Teil (29) zur Belastungsaufnahme aufweist, welcher weniger dick als die Fläche ist, und welcher zu einer der Seiten der Fläche hin versetzt ist (32).

10. Vorrichtung nach einem der Ansprüche 1 bis 8, **dadurch gekennzeichnet, dass** die Platine einen zentralen Teil (29) zur Belastungsaufnahme aufweist, welcher weniger dick als die Fläche ist, und welcher in der Mitte der beiden Seiten der Fläche angeordnet ist.

11. Vorrichtung nach einem der Ansprüche 1 bis 10, **dadurch gekennzeichnet, dass** die erste Platte und/oder die Platine aus Aluminium, aus Titan, oder aus einem Verbundmaterial bestehen.

12. Vorrichtung nach einem der Ansprüche 1 bis 11, **dadurch gekennzeichnet, dass** die Platine auf der ersten Platte durch Verschraubung (17) oder Verklebung gehalten wird.

13. Vorrichtung nach einem der Ansprüche 1 bis 12, **dadurch gekennzeichnet, dass** die Fläche abgeschrägt ist (26) und/oder über einen Falz an der Montageposition der Platte und/oder der Platine verfügt.

14. Fläche, die mit einer Vorrichtung nach einem der Ansprüche 1 bis 13 ausgestattet ist.

## Claims

1. Device for equipping a hole (1) in a panel (2) of a structure, notably of an aircraft, the panel, notably a top skin panel, being capable of being placed under a compressive stress (3) in a direction (4) perpendicular to one direction of the hole, the device comprising
- at least one first detachable plate (5), and
- held on this first plate, an insert (6) occupying the hole, this insert receiving the compressive stress through contact on one edge of the hole,
***characterised in that**:*
- the first plate and the insert comprise flanges (26, 27) in order to be clamped to the panel,
- the insert is provided with drillings in the location of a peripheral reinforcement bearing against the edge of the hole,
- locking screws are engaged in these drillings.

2. Device according to claim 1, ***characterised in that*** the insert occupies the hole in the panel with minimal play (9) which is taken up by the deformation of the panel when the latter is placed under the compression, notably when the aircraft is flying.

3. Device according to one of claims 1 to 2, ***characterised in that*** the hole has an oval shape, the compressive stress being orientated like the long axis (13) of the oval.

4. Device according to one of claims 1 to 3, ***characterised in* that** the hole is oval with, for an aircraft, a ratio between the extreme radii preferably equal to two.

5. Device according to one of claims 1 to 4, ***characterised in* that** the insert itself comprises a hole (18).

6. Device according to one of claims 1 to 5, ***characterised in* that** the panel is slightly plastic, for example it is formed of composite materials, notably of a sheet of carbon fibres and or of a sheet of stratified materials.

7. Device according to one of claims 1 to 6, ***characterised in that*** one flange comprises a seal (22).

8. Device according to one of claims 1 to 7, ***characterised in that*** one flange is connected to the plate and or to the insert with a connecting fillet (23).

9. Device according to one of claims 1 to 8, ***characterised in that*** the insert comprises a central stress-receiving portion (29) which is thinner than the panel, and offset (32) towards one of the faces of the panel.

10. Device according to one of claims 1 to 8, ***characterised in* that** the insert comprises a central stress-receiving portion (29) which is thinner than the panel, and located in the middle of the two faces of the panel.

11. Device according to one of claims 1 to 10, ***characterised in* that** the first plate and or the insert are made of aluminium, titanium, or composite material.

12. Device according to one of claims 1 to 11, ***characterised in that*** the insert is held on the first plate by screwing (17) or gluing.

13. Device according to one of claims 1 to 12, ***characterised in* that** the panel is chamfered (26) and or has a groove in the location of the mounting of the plate and or the insert.

14. Panel equipped with a device according to one of claims 1 to 13.
